# EUROPÄISCHE PATENTSCHRIFT

(11) **EP 3 744 967 B1**
(45) Veröffentlichungstag und Bekanntmachung des Hinweises auf die Patenterteilung: **09.03.2022**
(21) Anmeldenummer: 20174676.5
(22) Anmeldetag: 14.05.2020
(51) Int. Cl.: F02M 61/18, F02B 23/06

(54) **INJEKTOR MIT IN EINER EBENE LIEGENDEN EINSPRITZÖFFNUNGEN MIT UNTERSCHIEDLICHER EINSPRITZSTRAHLLAGE ZUR KRAFTSTOFFEINSPRITZUNG IN ZWEI EBENEN EINES BRENNRAUMS**
INJECTOR WITH INJECTION OPENINGS ON A PLANE WITH DIFFERENT INJECTION JET POSITION FOR INJECTING FUEL INTO LEVELS OF A COMBUSTION CHAMBER
INJECTEUR POURVU D'OUVERTURES D'INJECTION DISPOSÉES SUR UN NIVEAU À DIFFÉRENTS EMPLACEMENTS DE FAISCEAU D'INJECTION DESTINÉ À L'INJECTION DE CARBURANT À DEUX NIVEAUX D'UNE CHAMBRE DE COMBUSTION

(30) Priorität: 29.05.2019 DE 102019114448
(43) Veröffentlichungstag der Anmeldung: 02.12.2020
(73) Patentinhaber: VOLKSWAGEN AG, 38440 Wolfsburg (DE)
(72) Erfinder: Pott, Ekkehard, 38518 Gifhorn (DE); Blei, Ingo, 38110 Braunschweig (DE)
(74) Vertreter: Gulde & Partner

(56) Entgegenhaltungen:
- WO-A1-2015/135700
- DE-A1-102011 017 479
- FR-A1- 2 887 586

## Beschreibung

Die Erfindung betrifft eine Brennkraftmaschine, vorzugsweise für ein Kraftfahrzeug, mit mindestens einem Zylinder, der einen Brennraum umschließt und in dem ein Kolben hubverstellbar angeordnet ist, und mit mindestens einem Injektor je Zylinder zum Einspritzen von Kraftstoff in den Brennraum, wobei eine Längsmittelachse des Injektors im Wesentlichen koaxial zu einer Längsmittelachse des Zylinders angeordnet ist, wobei der jeweilige Injektor mehrere Einspritzöffnungen aufweist, durch welche der Kraftstoff beim jeweiligen Einspritzvorgang aus dem Injektor in Einspritzstrahlen austritt und in den Brennraum eintritt, wobei der jeweilige Injektor eine quer zu seiner Längsmittelachse verlaufenden Ebene mit einer Öffnungsreihe mit mehreren Einspritzöffnungen aufweist.

Die Druckschrift DE 10 2011 017 479 A1 offenbart eine Brennkraftmaschine mit mindestens einem Zylinder, der einen Brennraum umschließt und in dem ein Kolben hubverstellbar angeordnet ist, mit mindestens einem Injektor je Zylinder zum Einspritzen von Kraftstoff in den Brennraum, wobei der jeweilige Injektor mehrere Einspritzöffnungen aufweist, durch welche der Kraftstoff beim jeweiligen Einspritzvorgang aus dem Injektor austritt und in den Brennraum eintritt, wobei der jeweilige Injektor in einer quer zu seiner Längsmittelachse verlaufenden ersten Öffnungsebene eine erste Öffnungsreihe mit mehreren ersten Einspritzöffnungen und in einer quer zu seiner Längsmittelachse verlaufenden zweiten Öffnungsebene eine zweite Öffnungsreihe mit mehreren zweiten Einspritzöffnungen aufweist, wobei die ersten Einspritzöffnungen und die zweiten Einspritzöffnungen so zueinander angeordnet sind, dass während eines Einspritzvorgangs erste Einspritzstrahlen der ersten Einspritzöffnungen im Wesentlichen ohne Berührung mit zweiten Einspritzstrahlen der zweiten Einspritzöffnungen bis zum Kolben gelangen.

Es wird zudem auf die Druckschriften WO 2015/135700 A1, FR 2 887 586 A1 und DE 10 2018 207 828 A1 sowie EP 3 001 009 A1 verwiesen.

Mittlerweile haben sich 8-Loch-Injektoren als bester Kompromiss zwischen Durchfluss pro Einspritzstrahlenöffnung und Ausnutzung der im Brennraum vorliegenden Luft erwiesen.

Bei geringerer Lochanzahl wird die im Brennraum befindliche Sauerstoffmasse nicht maximal homogen ausgenutzt, und bei höherer Lochanzahl werden (bei vorgegebenem Gesamt-Durchfluss) die einzelnen Einspritzstrahlenöffnung im Durchmesser sehr klein, sodass das Verkokungsrisiko und die Überschneidung der einzelnen Strahlkeulen zunimmt, sodass es mehr oder weniger zwangsläufig zu Luftmangelgebieten im Brennraum kommt.

Der Erfindung liegt die Aufgabe zugrunde auf andere Weise einen Injektor derart auszubilden, sodass ein Strahlbild zur besseren Luftausnutzung im Brennraum ermöglicht wird, bei dem insbesondere die bisher auftretenden lokalen Luftmangelgebiete vermieden werden.

Brennkraftmaschine, vorzugsweise für ein Kraftfahrzeug, mit mindestens einem Zylinder, der einen Brennraum umschließt und in dem ein Kolben hubverstellbar angeordnet ist, und mit mindestens einem Injektor je Zylinder zum Einspritzen von Kraftstoff in den Brennraum, wobei eine Längsmittelachse des Injektors im Wesentlichen koaxial zu einer Längsmittelachse des Zylinders angeordnet ist, wobei der jeweilige Injektor mehrere Einspritzöffnungen aufweist, durch welche der Kraftstoff beim jeweiligen Einspritzvorgang aus dem Injektor in Einspritzstrahlen und in den Brennraum eintritt, wobei der jeweilige Injektor eine quer zu seiner Längsmittelachse verlaufenden Ebene mit einer Öffnungsreihe mit mehreren Einspritzöffnungen aufweist wobei die Einspritzöffnungen der Einspritzstrahlen zueinander derart angeordnet und ausgebildet sind, dass die aus den Einspritzöffnungen austretenden Strahlkegel ohne Berührung zum Kolben gelangen und in zwei Ebenen auf den Kolben auftreffen, wobei in Umfangsrichtung des Injektors gesehen, jeweils erst die übernächsten in derselben Ebene auf die Kolbenmulde des Kolbens auftreffen.

Erfindungsgemäß ist vorgesehen, dass vier erste Strahlkegel bildende Einspritzöffnungen der Einspritzstrahlen in einer Nullebene im Injektor angeordnet und mit einem einheitlichen ersten Strahlkegelwinkel gegenüber einer Injektorachse, bezogen auf die jeweilige Strahlkegelachse der Einspritzstrahlen der ersten Strahlkegel ausgebildet sind, sodass die vier ersten Strahlkegel in der ersten Ebene auf den Zylinderkolben auftreffen, und vier zweite Strahlkegel bildende Einspritzöffnungen der Einspritzstrahlen in der Nullebene im Injektor angeordnet sind, und mit einem einheitlichen zweiten Strahlkegelwinkel gegenüber der Injektorachse, bezogen auf die jeweilige Strahlkegelachse der Einspritzstrahlen der zweiten Strahlkegel ausgebildet sind, sodass die vier zweiten Strahlkegel in der zweiten Ebene auf den Zylinderkolben auftreffen, wobei die Strahllage der ersten Ebene derart ausgerichtet ist, dass auf einen Muldenrand der Kolbenmulde des Zylinderkolbens eingespritzt wird, wobei ein Summenwinkel von jeweils zwei Einspritzstrahlen mit den zugehörigen Strahlkegeln festgelegt ist, wobei der Summenwinkel zwischen 155° und 175° beträgt, und die Strahllage der zweiten Ebene derart ausgerichtet ist, dass auf einen Bereich zwischen Muldenrand und Kolbenmuldenmitte der Kolbenmulde des Zylinderkolbens eingespritzt wird, wobei ein Summenwinkel von jeweils zwei Einspritzstrahlen mit den zugehörigen Strahlkegeln festgelegt ist, wobei der Summenwinkel zwischen 155° und 120° beträgt, wobei ein Differenzwinkel zwischen den Strahlkegeln in der ersten Ebene und den Strahlkegeln in der zweiten Ebene in Bezug auf die jeweilige Strahlkegelachse in Umfangsrichtung der Injektorachse gesehen 45° beträgt.

In bevorzugter Ausgestaltung der Erfindung, beträgt ein durch die Einspritzöffnungen bestimmter Rotationswinkel der ersten und zweiten Strahlkegel der Einspritzstrahlen, der die Auftrefffläche der ersten und zweiten Strahlkegel auf die Kolbenmulde des Kolbens in beiden Ebenen bestimmt, zwischen 3° und 8°.

Es ist somit vorgesehen, dass ein Differenzwinkel zwischen den ersten Strahlkegeln in der ersten Ebene und den Strahlkegeln in der zweiten Ebene in Bezug auf die jeweilige Strahlkegelachse in Umfangsrichtung der Injektorachse 45°beträgt. Mit anderen Worten in einer Ebene (der ersten oder zweiten Ebene) beträgt der Differenzwinkel der Strahlkegel in bevorzugter Ausgestaltung der Erfindung bei einem 8-Loch-Injektor = 90°, das heißt die einzelnen Luftgebiete im Brennraum sind bei einem solchen 8-Loch-Injektor je Einspritzstrahl sehr groß, wodurch eine optimale Luftversorgung und somit eine entsprechende optimale Verbrennung gewährleistet ist.

Die Einspritzstrahlen, die in den jeweiligen Brennraum einspritzen erzeugen im Brennraum zwei Flammenfronten, die in zwei Ebenen auf eine Kolbenmulde des Kolbens auftreffen, wobei in Umfangsrichtung des Injektors gesehen, jeweils erst die übernächsten Strahlkegel einer Ebene, der in Umfangsrichtung in zwei Ebenen auf den Kolben auftreffenden Einspritzstrahlen ohne Berührung zu den benachbarten Einspritzstrahlen bis zur Kolbenmulde des Kolbens gelangen und dort überschneidungsfrei auf die Kolbenmulde des Kolbens auftreffen.

Die Erfindung wird nachfolgend in anhand der zugehörigen Zeichnungen näher erläutert. Es zeigen:
- Figur 1: einen Schnitt durch einen Brennraum eines Zylinders einer Brennkraftmaschine und dem zugehörigen Zylinderkolben mit der Kolbenmulde und einen zugehörige Injektor über den Kraftstoff in die Kolbenmulde eingespritzt wird.
- Figur 2: eine schematische Darstellung eines Rotationswinkels eine Einspritzstrahls zur Erläuterung;
- Figur 3A: eine Abwicklung der Muldenrand des Zylinderkolbens zur Darstellung der Auftrefffläche der Strahlkegel der mehreren in einer Ebene einspritzenden Einspritzstrahlen auftreffen, am Beispiel eines herkömmlichen 8-DüsenInjektors;
- Figur 3B: eine Abwicklung auf einen Muldenrand des Zylinderkolbens und auf eine Kolbenmulde des Zylinderkolbens zur Darstellung Strahlkegel der mehreren in zwei Ebenen einspritzenden Einspritzstrahlen am Beispiel eines erfindungsgemäßen 8-Düsen-Injektors.

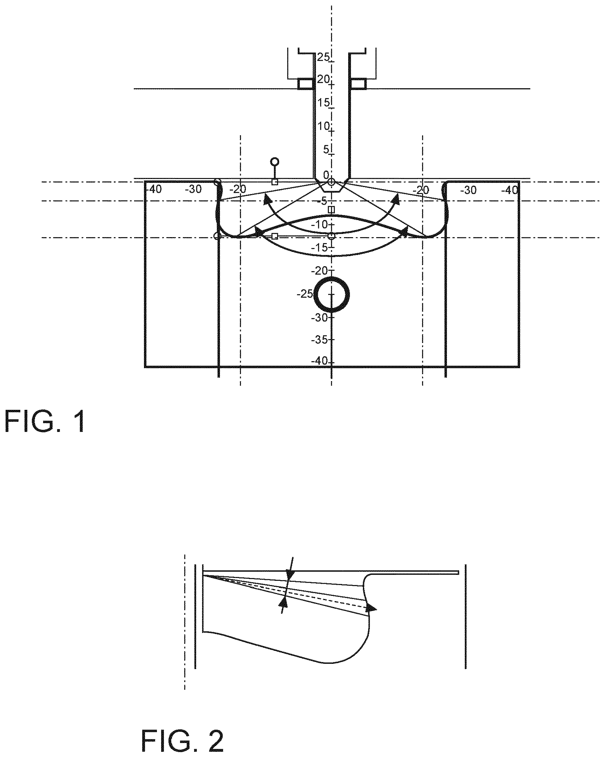

Figur 1 zeigt einen Schnitt durch einen Brennraum eines Zylinders einer Brennkraftmaschine und dem zugehörigen Zylinderkolben mit der Kolbenmulde und einen zugehörige Injektor über den Kraftstoff in die Kolbenmulde eingespritzt wird.

Erfindungsgemäß wurde ein Injektor ausgebildet, dessen Strahlbild eine bessere Luftausnutzung im Brennraum ermöglicht, und bei dem die bisher auftretenden lokalen Luftmangelgebiete vermieden werden, wie nachfolgend erläutert wird.

Die Erläuterung erfolgt anhand eines 8-Loch-Injektors, der sich wie erläutert, als bester Kompromiss zwischen Durchfluss pro Einspritzstrahlenöffnung und Ausnutzung der im Brennraum vorliegenden Luft erwiesen.

Erfindungsgemäß wird eine geradzahlige Anzahl Einspritzstrahlen n = 8 vorgesehen, die in Umfangsrichtung entlang des Endbereichs der Injektorspitze des Injektors gleichmäßig verteilt angeordnet sind.

Erfindungsgemäß wird im Detail vorgeschlagen, dass bei dem 8-Loch-Injektor eine Hälfte der Einspritzstrahlen in einer oberen Strahllage in einem vorgebbaren Bereich und die andere Hälfte mit einer tiefen/tieferen Strahllage einem vorgebbaren Bereich auszuführen.

Damit wird in vorteilhafter Weise die Vermischung der durch die Einspritzstrahlen gebildeten Strahlkegel SE1ₙ, SE2ₙ beim Auftreffen auf einen Muldenrand (vergleiche Figur 1) oder beim Auftreffen auf den Muldenbereich (vergleiche Figur 1) zwischen Muldenrand und Muldenbodenmitte vermindert, da erfindungsgemäß vorgesehen ist, dass jeweils erst in Umfangsrichtung gesehen der übernächste Strahlkegel SE1ₙ; SE2ₙ in derselben Ebene einspritzt, wie nachfolgend jeweils detailliert erläutert wird.

Die Figur 1 zeigt eine Einspritzebene, die nachfolgend als Nullebene bezeichnet wird, in der alle Einspritzstrahlenöffnungen angeordnet sind. Insofern unterscheidet sich die vorliegende Lösung bereits ein erstes Mal von der Druckschrift DE 10 2011 017 479 A1, die beschreibt, dass die Öffnungsebenen im Injektor axial voneinander beabstandet sind, wobei die zweite Öffnungsebene näher an einer dem Kolben zugewandten Injektorspitze angeordnet ist als die erste Öffnungsebene.

Gemäß der Erfindung ist vorgesehen, dass die mehrere erste Strahlkegel SE1ₙ bildenden Einspritzöffnungen der Einspritzstrahlen in der Nullebene im Injektor angeordnet und mit einem einheitlichen ersten Strahlkegelwinkel αₙ gegenüber einer Injektorachse, bezogen auf die jeweilige Strahlkegelachse der Einspritzstrahlen der Strahlkegel SE1ₙ ausgebildet sind, sodass die ersten Strahlkegel SE1ₙ in der ersten Ebene auf den Zylinderkolben auftreffen.

Im in Figur 1 dargestellten Ausführungsbeispiel sind in der Schnittdarstellung zwei Strahlkegel, ein erster Strahlkegel SE1₁ mit einem Strahlkegelwinkel α₁ = 80° und ein dritter Strahlkegel SE1₃ mit α₃ = 80° der Einspritzstrahlen gegenüber der Injektorachse in der ersten Ebene gezeigt, die den Summenwinkel Σ160° bilden.

Es werden erfindungsgemäß bevorzugt vier erste Strahlkegel SE1ₙ (n = 4) in Umfangsrichtung entlang des Endbereichs der Injektorspitze des Injektors gleichmäßig verteilt derart angeordnet und ausgebildet, sodass die ersten Strahlkegel SE1ₙ (n = 4) in der ersten Ebene E1 auf den Muldenrand treffen.

Mit anderen Worten, es sind in der ersten Ebene noch ein zweiter Strahlkegel SE1₂ mit einem Strahlkegelwinkel α₂ = 80° und ein vierter Strahlkegel SE1₄ mit α₄ = 80° (im Schnitt der Figur 1 nicht sichtbar) angeordnet, die gegenüber der Injektorachse den Summenwinkel Σ160° bilden.

Zur Verdeutlichung des Rotationswinkels der ersten Strahlkegel SE1ₙ (n = 4) der Einspritzstrahlen dient Figur 2, wodurch ein Auftreffpunkt des jeweiligen Einspritzstrahls und eine Auftrefffläche der ersten Strahlkegel SE1ₙ (n = 4) im Bereich des Muldenrandes vorgebbar ist, wobei der Rotationswinkels zwischen 3° und 8° beträgt.

Die in Figur 1 gezeigte Ausrichtung der Einspritzstrahlen in der oberen Strahllage mit dem Summenwinkel Σ160° gegenüber der Injektorachse ist nur beispielhaft, denn es wird erfindungsgemäß ein Bereich vorgeschlagen, nämlich, dass die Einspritzstrahlen in der oberen Strahllage in einem Bereich angeordnet beziehungsweise ausgerichtet sind, der durch die Summenwinkel Σ155° bis Σ175° gegenüber der Injektorachse Z definiert ist.

Mit anderen Worten, die erste Ebene wird gegenüber der Null-Ebene dadurch definiert, dass ein Summenwinkel Σ gegenüber der Injektorachse (vergleiche Figur 1) zwischen jeweils zwei Einspritzstrahlen, der vier Strahlkegel SE1ₙ (n = 4) zwischen Σ155° und Σ175° beträgt.

Gemäß der Erfindung ist eine zweite Ebene vorgesehen, in der die mehrere zweite Strahlkegel SE2ₙ bildenden Einspritzstrahlen mit einem einheitlichen Strahlkegelwinkel βₙ (n = 4) gegenüber der Injektorachse, bezogen auf die jeweilige Strahlkegelachse der Einspritzstrahlen der Strahlkegel SE2ₙ angeordnet sind.

Im in Figur 1 dargestellten Ausführungsbeispiel sind in der Schnittdarstellung zwei Strahlkegel, ein erster Strahlkegel SE2₁ mit einem Strahlkegelwinkel β₁ = 60° und ein dritter Strahlkegel SE2₃ mit β₃ = 60° der Einspritzstrahlen ESₙ in der zweiten Ebene gezeigt, die den Summenwinkel Σ120° gegenüber der Injektorachse bilden.

Es werden wiederum erfindungsgemäß bevorzugt vier Strahlkegel SE2ₙ (n = 4) in Umfangsrichtung entlang des Endbereichs der Injektorspitze des Injektors gleichmäßig derart verteilt angeordnet und ausgebildet, sodass die zweiten Strahlkegel SE2ₙ (n = 4) in der zweiten Ebene auf den Muldenbereich (vergleiche Figur 1) zwischen Muldenrand und Muldenbodenmitte treffen.

Mit anderen Worten, es sind in der zweiten Ebene noch ein zweiter Strahlkegel SE2₂ mit einem Strahlkegelwinkel β₂ = 60° und ein vierter Strahlkegel SE2₄ mit β₄ = 60° (im Schnitt der Figur 1 nicht sichtbar) angeordnet, die den Summenwinkel Σ120° gegenüber der Injektorachse bilden.

Zur Verdeutlichung des Rotationswinkels der zweiten Strahlkegel SE2ₙ (n = 4) der Einspritzstrahlen dient wiederum das beschrieben und erläuterte Prinzip gemäß Figur 2, wodurch ein Auftreffpunkt des jeweiligen Einspritzstrahls und eine Auftrefffläche der Strahlkegel SE2ₙ (n = 4) im Muldenbereich M, der zwischen Muldenrand und Muldenbodenmitte vorgebbar ist, zwischen 3° und 8° beträgt.

Die in Figur 1 gezeigte Ausrichtung der Einspritzstrahlen in der unteren tiefen/tieferen Strahllage mit dem Summenwinkel Σ120° gegenüber der Injektorachse ist nur beispielhaft, denn es wird erfindungsgemäß ein Bereich vorgeschlagen, nämlich, dass die Einspritzstrahlen in der tiefen/tieferen Strahllage in einem Bereich angeordnet beziehungsweise ausgerichtet sind, der durch die Summenwinkel Σ<155°bis Σ120° gegenüber der Injektorachse, noch weiter bevorzugt zwischen Σ140°bis Σ120°definiert ist.

Mit anderen Worten, die zweite Ebene wird gegenüber der Ebene dadurch definiert, dass ein Summenwinkel Σ (vergleiche Figur 1) gegenüber der Injektorachse zwischen jeweils zwei Einspritzstrahlen, der vier zweiten Strahlkegel SE2ₙ (n = 4) zwischen Σ155° und Σ175° beträgt.

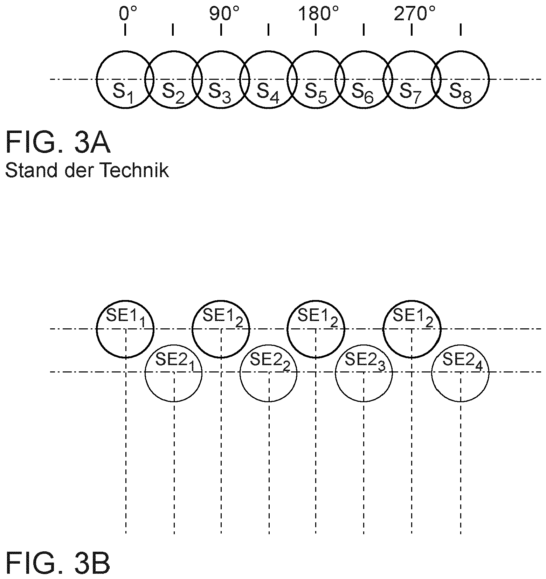

Durch die Figuren 3A und 3B wird die Erfindung anhand der gegenübergestellten Abwicklungen auf einen Muldenrand des Zylinderkolbens (Figur 3A) beziehungsweise auf den Muldenrand des Zylinderkolbens und die Kolbenmulde des Zylinderkolbens auftreffenden Strahlkegel SE1ₙ; SE2ₙ der mehreren einspritzenden Einspritzstrahlen verdeutlicht.

Die Figur 3A zeigt die Auftreffflächen der Strahlkegel S₁ bis S₈ der mehreren in einer Ebene einspritzenden Einspritzstrahlen ESₙ (n = 8) auf den Muldenrand des Zylinderkolbens in einem seitlichen Abstand von 20 mm von der Injektorachse des Injektors 2 in Richtung des Muldenrandes (vergleiche strichpunktierte Linie), welche die Abwicklungsebene verdeutlichen soll bezüglich eines herkömmlichen 8-Loch-Injektors.

Es wird in Figur 3A deutlich, dass die Auftreffflächen der Strahlkegel Sₙ (S₁ bis S₈) (hier dargestellt maximaler Rotationswinkel von 8°) Überschneidungen aufweisen, wobei die Flächen der Überschneidungen von dem jeweiligen Rotationswinkels zwischen 3° und 8° abhängen.

In jedem Fall sind die Auftreffflächen der Strahlkegel S₁ bis S₈ eng in einer Ebene nebeneinander liegend angeordnet und bilden um ungünstigsten Fall (wie dargestellt) bei großen Rotationswinkeln große Überschneidungsflächen aus, wodurch es zu kleinen oder großen Luftmangelgebieten im Brennraum mit entsprechend nicht optimaler Verbrennung kommt.

Die Figur 3B zeigt vergleichsweise die Abwicklung auf den Muldenrand des Zylinderkolbens und auf den Muldenbereich zwischen Kolbenrand und Kolbenmuldenmitte des Zylinderkolbens in dem seitlichen Abstand von 20 mm (analog zu Figur 3A) von der Injektorachse des Injektors zur Darstellung Strahlkegel SE1₁, SE1₂, SE1₃, SE1₄; SE2₁, SE2₂, SE2₃, SE2₄, der mehreren in zwei Ebenen einspritzenden Einspritzstrahlen am Beispiel des erfindungsgemäßen 8-Loch-Injektors.

Es wird in Figur 3B deutlich, dass die Auftreffflächen der Strahlkegel S₁ bis S₈ (hier dargestellt maximale Rotationswinkels 8°) keine Überschneidungen aufweisen, wobei die Flächen der Überschneidungen von dem jeweiligen Rotationswinkels zwischen 3° und 8° abhängen. In jedem Fall sind die Auftreffflächen der Strahlkegel S₁ bis S₈ gegenüber dem Injektor gemäß Figur 3A (Stand der Technik), bezogen auf die Achse des Injektors, in axialer Richtung in den Ebenen und in radialer Richtung weit(er) zueinander beabstandet angeordnet, sodass selbst im ungünstigsten Fall (wie dargestellt) bei großen Rotationswinkeln keine Überschneidungsflächen ausgebildet sind. Im Gegenteil es werden einzelne große Luftgebiete im Brennraum mit entsprechend optimaler Verbrennung gebildet.

Gemäß Figur 3B wird durch die Abwicklung verdeutlicht, dass eine Trennung der Strahllagen zweier benachbarter Strahlkegel um einen Differenzwinkel ΔSE1ₙ/SE2ₙ in Umfangsrichtung bezüglich der Injektorachse des Injektors gesehen von >15° besser >25° erreicht und angestrebt wird, wodurch die einzelnen Luftgebiete im Brennraum mit optimaler Luftversorgung und somit entsprechend optimaler Verbrennung möglichst groß sind.

Es wird in Figur 3B beispielhaft der Differenzwinkel ΔSE1ₙ/SE2ₙ zwischen dem ersten Strahlkegel SE1₁ in der ersten Ebene und dem ersten Strahlkegel SE2₁ in der zweiten Ebene gezeigt, der im Ausführungsbeispiel von den jeweiligen Strahlkegelachse in Umfangsrichtung der Injektorachse gesehen (vergleiche ΔSE1₁/SE2₁ in Figur 3B) = 45° beträgt, also mit 45° > 25° bei dem erfindungsgemäß vorgestellten 8-Loch-Injektor relativ groß ist.

Der axiale Abstand der Ebenen und somit der Abstand der Strahlkegel SE1₁, SE1₂, SE1₃, SE1₄; SE2₁, SE2₂, SE2₃, SE2₄ in den Ebenen hängt wie zuvor erläutert von den gewählten Summenwinkeln gegenüber der Injektorachse ab.

Generalisiert kann gesagt werden, dass eine Vermischung der Strahlkegel SE1 ₙ; SE2 ₙ beim Auftreffen auf Muldenboden und Muldenrand vermindert wird, da jeweils erst der übernächste Strahlkegel SE1₁, SE1₂, SE1₃, SE1₄ in derselben Ebene beziehungsweise einspritzt SE2₁, SE2₂, SE2₃, SE2₄ beziehungsweise auf die Kolbenmulde des Kolbens trifft, wodurch im Ergebnis bei der Verwendung des vorgestellten 8-Loch-Injektors insbesondere durch die tiefe/tiefere Strahllage der Einspritzstrahlen in der zweiten Ebene ein Optimum im Verhältnis Mitteldruck (pₘᵢ) und Verbrauch und ein Optimum der Emissionsreduzierung der Emissionen (NOx, Ruß, CO, HC), insbesondere bei einer mit Diesel-Kraftstoff betriebenen Brennkraftmaschine erreicht wird.

Mit anderen Worten (vergleiche Figur 3B), spritzen in Umfangsrichtung des Zylinders oder des 8-Loch-Injektors n = 8, je vier Stahlkegel n = 4 in einer der Ebenen gesehen
ein Strahlkegel SE1₁ in Hochlage,
ein Strahlkegel SE2₁ in Tieflage,
ein Strahlkegel SE1₂ in Hochlage,
ein Strahlkegel SE2₂ in Tieflage,
ein Strahlkegel SE1₃ in Hochlage,
ein Strahlkegel SE2₃ in Tieflage,
ein Strahlkegel SE1₄ in Hochlage,
ein Strahlkegel SE2₃ in Tieflage
hinsichtlich der Orientierung abwechseln in die Ebenen ein.

Zudem können bei der selbstzündenden Brennkraftmaschine, also vorzugsweise bei dem Dieselmotor, je Ebene Flammenfronten von der Einspritzstrahlen in der ersten Ebene und der zweiten Ebene gebildet werden. Die Auslegung und Orientierung der Einspritzstrahlen wird derart zusammen mit der Einspritzmenge und dem Einspritzdruck abgestimmt, sodass sich die Flammenfronten möglichst spät treffen, wodurch zur Umsetzung des eingespritzten Kraftstoffs stets ausreichend Sauerstoff zur Verfügung steht, sodass eine möglichst schadstoffarme und vorzugsweise rußarme Verbrennung gewährleistet ist.

### Bezugszeichenliste

- Sₙ: Strahlkegel (Stand der Technik) n (n = Anzahl)
- SE1ₙ: Strahlkegel in der ersten Ebene n (n = Anzahl)
- SE2ₙ: Strahlkegel in der zweiten Ebene n (n = Anzahl)

### Bezugszeichenliste

- 10: Zylinder
- 20: Injektor
- 30: Zylinderkolben
- M: Kolbenmulde
- ESₙ: Einspritzstrahlen (n = Anzahl)
- M1: Muldenrand
- M2: Muldenbereich
- M3: Muldenbodenmitte
- E0: Einspritzebene
- E1: erste Ebene
- E2: zweite Ebene
- SE1: Strahlkegel in der ersten Ebene E1 (n = Anzahl)
- SE2: Strahlkegel in der zweiten Ebene E2 (n = Anzahl)
- αΣ: Summenwinkel
- βΣ: Summenwinkel
- αₙ: Strahlkegelwinkel in der ersten Ebene E1
- βₙ: Strahlkegelwinkel in der zweiten Ebene E2
- Sₙ: Strahlkegel (Stand der Technik)
- ΔSE1ₙ/SE2ₙ: Differenzwinkel

## Patentansprüche

1. Brennkraftmaschine mit mindestens einem Zylinder, der einen Brennraum umschließt und in dem ein Kolben hubverstellbar angeordnet ist, und mit mindestens einem Injektor je Zylinder zum Einspritzen von Kraftstoff in den Brennraum, wobei eine Längsmittelachse des Injektors koaxial zu einer Längsmittelachse des Zylinders angeordnet ist, wobei der jeweilige Injektor mehrere Einspritzöffnungen aufweist, durch welche der Kraftstoff beim jeweiligen Einspritzvorgang aus dem Injektor in Einspritzstrahlen austritt und in den Brennraum eintritt, wobei der jeweilige Injektor eine quer zu seiner Längsmittelachse verlaufenden Ebene mit einer Öffnungsreihe mit mehreren Einspritzöffnungen aufweist, wobei die Einspritzöffnungen der Einspritzstrahlen zueinander derart angeordnet und ausgebildet sind, dass die aus den Einspritzöffnungen austretenden Strahlkegel ohne Berührung zum Kolben gelangen und in zwei Ebenen auf den Kolben auftreffen, wobei in Umfangsrichtung des Injektors gesehen, jeweils erst die übernächsten Strahlkegel (SE1ₙ; SE2ₙ) in derselben Ebene auf die Kolbenmulde des Kolbens auftreffen,
**dadurch gekennzeichnet, dass**
• vier (n=4) erste Strahlkegel (SE1ₙ) bildende Einspritzöffnungen der Einspritzstrahlen) in einer Nullebene im Injektor angeordnet und mit einem einheitlichen ersten Strahlkegelwinkel gegenüber einer Injektorachse, bezogen auf die jeweilige Strahlkegelachse der Einspritzstrahlen der ersten Strahlkegel (SE1ₙ) ausgebildet sind, sodass die vier (n=4) ersten Strahlkegel (SE1ₙ) in der ersten Ebene auf den Zylinderkolben auftreffen, und
• vier (n=4) zweite Strahlkegel (SE2ₙ) bildende Einspritzöffnungen der Einspritzstrahlen in der Nullebene im Injektor angeordnet sind, und mit einem einheitlichen zweiten Strahlkegelwinkel gegenüber der Injektorachse, bezogen auf die jeweilige Strahlkegelachse der Einspritzstrahlen der zweiten Strahlkegel (SE2ₙ) ausgebildet sind, sodass die vier (n=4) zweiten Strahlkegel (SE2ₙ) in der zweiten Ebene auf den Zylinderkolben auftreffen, wobei
- die Strahllage der ersten Ebene derart ausgerichtet ist, dass auf einen Muldenrand der Kolbenmulde des Zylinderkolbens eingespritzt wird, wobei ein Summenwinkel von jeweils zwei Einspritzstrahlen mit den zugehörigen Strahlkegeln (SE1ₙ (n = 4)) festgelegt ist, wobei der Summenwinkel zwischenΣ155° und Σ175° beträgt, und
- die Strahllage der zweiten Ebene derart ausgerichtet ist, dass auf einen Bereich zwischen Muldenrand und Kolbenmuldenmitte der Kolbenmulde des Zylinderkolbens eingespritzt wird, wobei ein Summenwinkel von jeweils zwei Einspritzstrahlen mit den zugehörigen Strahlkegeln (SE2ₙ) festgelegt ist, wobei der Summenwinkel zwischenΣ155° und Σ120° beträgt, wobei
- ein Differenzwinkel zwischen den Strahlkegeln (SE1ₙ) in der ersten Ebene und den Strahlkegeln (SE2ₙ) in der zweiten Ebene in Bezug auf die jeweilige Strahlkegelachse in Umfangsrichtung der Injektorachse gesehen 45° beträgt.

2. Brennkraftmaschine nach Anspruch 1, **dadurch gekennzeichnet, dass** der Summenwinkel von jeweils zwei Einspritzstrahlen mit den zugehörigen Strahlkegeln (SE2ₙ) in der zweiten Ebene zwischen Σ140° und Σ120° beträgt.

3. Brennkraftmaschine nach Anspruch 1, **dadurch gekennzeichnet, dass** ein durch die Einspritzöffnungen bestimmter Rotationswinkels der ersten und zweiten Strahlkegel (SE1ₙ; SE2ₙ) der Einspritzstrahlen, der die Auftrefffläche der ersten und zweiten Strahlkegel (SE1ₙ; SE2ₙ) auf die Kolbenmulde des Kolbens in beiden Ebenen bestimmt, zwischen 3° und 8° beträgt.

## Claims

1. Internal combustion engine with at least one cylinder which encloses a combustion chamber and in which a piston is arranged such that it can move in a reciprocating manner, and with at least one injector per cylinder for the injection of fuel into the combustion chamber, a longitudinal centre axis of the injector being arranged coaxially with respect to a longitudinal centre axis of the cylinder, the respective injector having a plurality of injection openings, through which the fuel exits the injector in injection jets during the respective injection operation and enters the combustion chamber, the respective injector having a plane, running transversely with respect to its longitudinal centre axis, with a row of openings with a plurality of injection openings, the injection openings of the injection jets being configured and oriented with respect to one another in such a way that the jet cones which exit the injection openings pass without contact to the piston and impinge on the piston in two planes, in each case first of all the next but one jet cones (SE1ₙ; SE2ₙ) impinging on the piston recess of the piston in the same plane as viewed in the circumferential direction of the injector, **characterized in that**
• injection openings (of the injection jets) which form four (n = 4) first jet cones (SE1ₙ) are arranged in a zero plane in the injector and are configured with a uniform first jet cone angle with respect to an injector axis, in relation to the respective jet cone axis of the injection jets of the first jet cones (SE1ₙ), with the result that the four (n = 4) first jet cones (SE1ₙ) impinge on the cylinder piston in the first plane, and
• injection openings (of the injection jets) which form four (n = 4) second jet cones (SE2ₙ) are arranged in the zero plane in the injector and are configured with a uniform second jet cone angle with respect to the injector axis, in relation to the respective jet cone axis of the injection jets of the second jet cones (SE2ₙ), with the result that the four (n = 4) second jet cones (SE2ₙ) impinge on the cylinder piston in the second plane,
- the jet position of the first plane being oriented in such a way that injection is carried out onto a recess edge of the piston recess of the cylinder piston, a sum angle of in each case two injection jets with the associated jet cones (SE1ₙ (n = 4)) being defined, the sum angle being between Σ155° and Σ175°,
- the jet position of the second plane being oriented in such a way that injection is carried out onto a region between the recess edge and the piston recess centre of the piston recess of the cylinder piston, a sum angle of in each case two injection jets with the associated jet cones (SE2ₙ) being defined, the sum angle being between Σ155° and Σ120°,
- a differential angle between the jet cones (SE1ₙ) in the first plane and the jet cones (SE2ₙ) in the second plane being 45° in relation to the respective jet cone axis as viewed in the circumferential direction of the injector axis.

2. Internal combustion engine according to Claim 1, **characterized in that** the sum angle of in each case two injection jets with the associated jet cones (SE2ₙ) in the second plane is between Σ140° and Σ120°.

3. Internal combustion engine according to Claim 1, **characterized in that** a rotational angle, defined by way of the injection openings, of the first and second jet cones (SE1ₙ; SE2ₙ) of the injection jets, which rotational angle defines the impingement area of the first and second jet cones (SE1ₙ; SE2ₙ) on the piston recess of the piston in the two planes, is between 3° and 8°.

## Revendications

1. Moteur à combustion interne comprenant au moins un cylindre qui entoure une chambre de combustion et dans lequel un piston est disposé de manière réglable en course, et comprenant au moins un injecteur par cylindre pour injecter du carburant dans la chambre de combustion, un axe central longitudinal de l'injecteur étant disposé coaxialement à un axe central longitudinal du cylindre, l'injecteur respectif présentant plusieurs orifices d'injection à travers lesquels, à chaque processus d'injection respectif, le carburant sort de l'injecteur par des jets d'injection et entre dans la chambre de combustion, l'injecteur respectif présentant un plan s'étendant transversalement à son axe central longitudinal et doté d'une rangée d'orifices dotée de plusieurs orifices d'injection, les orifices d'injection des jets d'injection étant disposés les uns par rapport aux autres et étant réalisés de telle sorte que les jets coniques émergeant des orifices d'injection atteignent le piston sans contact et sont incidents dans deux plans sur le piston, dans lequel, vu dans la direction circonférentielle de l'injecteur, respectivement les seconds jets coniques (SE1ₙ; SE2ₙ) seulement sont incidents dans le même plan sur la cavité de piston du piston,
**caractérisé en ce que**
• quatre (n = 4) orifices d'injection des jets d'injection formant des premiers jets coniques (SE1ₙ) sont disposés dans un plan zéro dans l'injecteur et sont réalisés avec un premier angle de jet conique uniforme par rapport à l'axe d'injecteur, en se référant à l'axe de jet conique respectif des jets d'injection des premiers jets coniques (SE1ₙ) de sorte que les quatre (n = 4) premiers jets coniques (SE1ₙ) sont incidents dans le premier plan sur le piston de cylindre, et
• quatre (n = 4) orifices d'injection des jets d'injection formant des deuxièmes jets coniques (SE2ₙ) sont disposés dans le plan zéro dans l'injecteur, et sont réalisés avec un deuxième angle de jet conique uniforme par rapport à l'axe d'injecteur, en se référant à l'axe de jet conique respectif des jets d'injection des deuxièmes jets coniques (SE2ₙ) de sorte que les quatre (n = 4) deuxièmes jets coniques (SE2ₙ) sont incidents dans le deuxième plan sur le piston de cylindre, dans lequel
- la position de jet du premier plan est orientée de telle sorte que l'injection survient sur un bord de cavité de la cavité de piston du piston de cylindre, un angle de somme de respectivement deux jets d'injection étant défini avec les jets coniques associés (SE1ₙ (n = 4)), l'angle de somme étant compris entre Σ155° et Σ175°, et
- la position de jet du deuxième plan étant orientée de telle sorte que l'injection survient sur une zone entre le bord de cavité et le centre de cavité de piston de la cavité de piston du piston de cylindre, un angle de somme de respectivement deux jets d'injection étant défini avec les jets coniques associés (SE2ₙ), l'angle de somme étant compris entre Σ155° et Σ120°, dans lequel
- un angle différentiel entre les jets coniques (SE1ₙ) dans le premier plan et les jets coniques (SE2ₙ) dans le deuxième plan étant de 45° en se référant à l'axe de jet conique respectif dans la direction circonférentielle de l'axe d'injecteur.

2. Moteur à combustion interne selon la revendication 1, **caractérisé en ce que** l'angle de somme de respectivement deux jets d'injection avec les jets coniques associés (SE2ₙ) dans le deuxième plan est compris entre Σ140° et Σ120°.

3. Moteur à combustion interne selon la revendication 1, **caractérisé en ce qu'**un angle de rotation déterminé par les orifices d'injection des premiers et deuxièmes jets coniques (SE1ₙ; SE2ₙ) des jets d'injection, qui détermine la surface d'incidence des premiers et deuxièmes jets coniques (SE1ₙ; SE2ₙ) sur la cavité de piston du piston dans les deux plans, est compris entre 3° et 8°.
